# EUROPEAN PATENT APPLICATION

(11) **EP 3 422 195 A1**
(43) Date of publication of application: **02.01.2019**
(21) Application number: 17179092.6
(22) Date of filing: 30.06.2017
(51) Int. Cl.: G06F 13/38

(54) **DEVICE AND METHOD**

(71) Applicant: Vestel Elektronik Sanayi ve Ticaret A.S., 45030 Manisa (TR)
(72) Inventor: EREN, Burak, 45030 Manisa (TR)
(74) Representative: Flint, Adam

(57) **Abstract**

A device comprise a plurality of transmission functions. At least two transmission functions are configured to transmit data in accordance with different communication protocols. A memory is configured to store data to be transmitted, whereby a size of the data is determined from address information associated with the stored data in the memory. At least one processor is configured to determine based on the size of data which of the transmission functions to use.

## Description

### Technical Field

The present disclosure relates to a device which supports a plurality of different communication protocols and a method for selecting a transmission function associated with a respective one of a plurality of different protocols.

### Background

Devices are known which are able to use a number of different communication protocols to communicate with other devices. For example a device may support Bluetooth, and Wi-Fi. In a given situation more than one of these protocols may be available to use. It has been proposed to base the selection of the communication protocol on size of the data transfer.

### Summary

According to a first aspect disclosed herein, there is provided a device comprising: a plurality of transmission functions, at least two transmission functions being configured to transmit data in accordance with different communication protocols; a memory configured to store data to be transmitted, whereby a size of said data is determined from address information associated with the stored data in said memory; and at least one processor configured to determine based on said size of data which of said transmission functions to use.

The at least one processor may be configured to use, when determining which of said transmission functions to use, in addition to said size of data, performance data associated with at least one transmission path from said device to a receiving device, the or each transmission path being associated with a respective transmission function.

The performance data for at least one transmission path may be dependent on at least one of a bandwidth of said respective transmission path and a connection time associated with said transmission path.

The at least one processor may be configured to determine for at least one transmission path a time between data being prepared for transmission by a respective transmission function and being received at a receiving device.

At least one transmission function may be configured to prepare said data for transmission by packetizing said data as a payload in at least one packet.

At least one processor may be configured to determine which of said transmission functions to use while and/or after a default one of said transmission functions has prepared said data for transmission.

The at least one processor may be configured to use, when determining which of said transmission functions to use, in addition to said size of data, at least one of: power consumption associated with at least one transmission path from said device to a receiving device, the or each transmission path being associated with a respective transmission function; data added as header to said data to be transmitted; and set-up time associated at least one transmission path from said device to a receiving device, the or each transmission path being associated with a respective transmission function.

At least one of said transmission functions may be configured to transmit in accordance with a first protocol, said data which is packetized in accordance with a different protocol.

At least one of said transmission functions may be configured to cause said data to be transmitted in data packets and at least one of said transmission functions may be configured to cause said data to be transmitted in a data stream.

At least one of said transmission functions may be configured to transmit said data in a data stream in accordance with one protocol with header data associated with a different protocol.

The different communication protocols may comprise one or more of: a Wi-Fi protocol; a Bluetooth protocol; and an infra-red protocol.

A controller for controlling a television device may comprise a device such as previously described.

According to another aspect, there is provided a method comprising: storing data to be transmitted in a memory; determining a size of said data from address information associated with the stored data in said memory; and determining based on said size of data which of a plurality of transmission functions to use, at least two transmission functions being configured to transmit data in accordance with different communication protocols;

The determining may further comprise using performance data associated with at least one transmission path, the or each transmission path being associated with a respective transmission function.

The performance data for at least one transmission path may be dependent on at least one of a bandwidth of said respective transmission path and a connection time associated with said transmission path.

The method may comprise determining for at least one transmission path a time between data being prepared for transmission by a respective transmission function and being received at a receiving device.

The method may comprise preparing said data for transmission by packetizing said data as a payload in at least one packet.

The method may comprise determining which of said transmission functions to use while and/or after a default one of said transmission functions has prepared said data for transmission.

The determining may comprise using, in addition to said size of data, at least one of: power consumption associated with at least one transmission path ice to a receiving device, the or each transmission path being associated with a respective transmission function; data added as header to said data to be transmitted; and set-up time associated at least one transmission path to a receiving device, the or each transmission path being associated with a respective transmission function.

The method may comprise transmitting in accordance with a first protocol, said data which is packetized in accordance with a different protocol.

The method may comprise transmitting said data in data packets or in a data stream.

The method may comprise transmitting said data in a data stream in accordance with one protocol with header data associated with a different protocol.

The different communication protocols may comprise one or more of: a Wi-Fi protocol; a Bluetooth protocol; and an infra-red protocol.

### Brief Description of the Drawings

To assist understanding of the present disclosure and to show how embodiments may be put into effect, reference is made by way of example to the accompanying drawings in which:
Figure 1 shows schematically a first transmitting device and a second receiving device; and
Figure 2 shows schematically shows a method of selecting a transmission function.

### Detailed Description

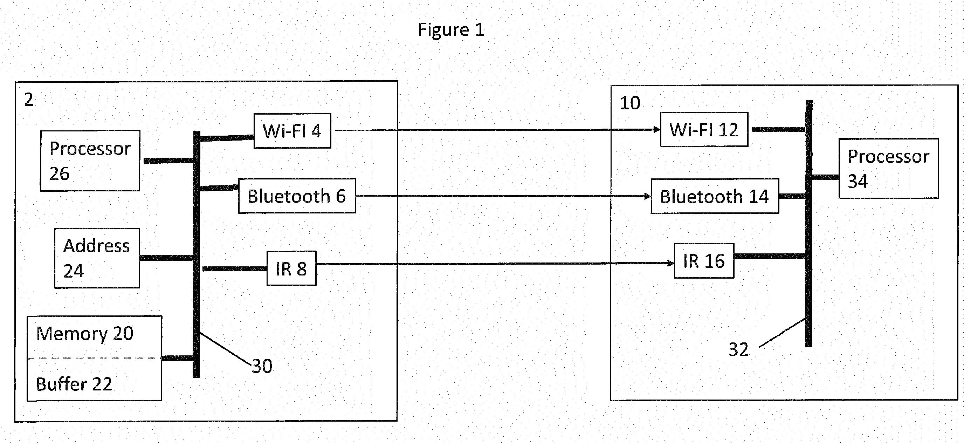

Reference is made to Figure 1 which schematically shows a system having a first device 2 and a second device 10. In this example, the first device 2 is configured to transmit data to a second device 10. The first device is referred to a transmitting device and the second device is referred to as a receiving device.

In the example shown, the first device and second device are able to support a plurality of different communication protocols. The communication protocols may be any suitable communication protocols. In the example shown, the communication protocols are Wi-Fi, Bluetooth and infra-red IR communication protocols. It should be appreciated that this is by way of example only. In some embodiments, only two protocols may be supported. In other embodiments, more than three protocols may be supported. One or more protocols may be used instead of or as well as the above three example protocols. In some embodiments, the different protocols may be different versions of the same communication protocol.

To support the three example protocols, the first device 2 has a Wi-Fi transmission function 4, a Bluetooth transmission function 6 and an infra-red transmission function 8. The second device 10 has a Wi-Fi receiver function 12, a Bluetooth receiver function 14 and an infra-red receiver function 16.

The transmission functions may be provided by hardware and/or software. Likewise the receiver functions may be provided by hardware and/or software.

It should be appreciated that in some embodiments, at least a part of at least one transmission function may be shared by at least two different ones of the protocols. Likewise, at least a part of at least one receiver function may be shared by at least two different ones of the protocols in some embodiments.

It should be appreciated that in some embodiments, the second device may also be configured to transmit to the first device. In this embodiment, the first device would also be able to receive data. Appropriate transmission and receiving functions would be provided to support this in the respective devices.

The first device comprises a memory 20, at least a part of which is used as a buffer 22 for data which is to be transmitted to the second device via one or more of the transmission functions.

The first device also comprises addressing circuitry or an addressing function 24.This may be provided by hardware and/or software.

The first device also comprises at least one processor 26. A interconnect 30 is provided to allow the various parts of the device to communicate. For example, the interconnect may be provided by a bus or the like.

The second device is also provided with at least one processor 34 and an interconnect 32 to allow the various parts of the device to communicate

The first and second devices may be any suitable device. By way of example only the first device may be a controller and the second device may be a television. The television may be controlled by the controller. The controller may be a remote control device or a computer device which is programed to control the television. The computer device may be a smart phone, tablet or any other suitable device which may be programmed to provide a controller function for a television.

When data is going to be transmitted to the television, it may be desirable to use an effective transmission channel to minimize the wait duration (that is how long it takes to get the data to the television) and/or battery consumption.

In some embodiments, some or all of the data which is to be transmitted to the second device is stored in the buffer 22 of the memory.

Some embodiments may use the size of the information or data in the buffer to select the transmission path.

As previously mentioned, when information or data is to be sent from the first device to the second device, that information or data will be stored in the buffer 22. In particular, in some embodiments, the data is stored to the buffer as a single set of data, in consecutive blocks of data. These consecutive blocks of data may be physically contiguous blocks of data or contiguous in a virtual memory.

In some embodiments, the information that will be transmitted which is stored in the buffer may be simply the payload, non-packetized data that is ready to be sent, or packetized data.

Depending on the protocol, one or more of the transmission functions may be configured to provide at least a part of the data, for example header information and/or other information required by the protocol in question,

In some embodiments, the size of the information or data may be determined by multiplying the size of each memory block by the number of the memory blocks required to store the data or information. The number of blocks may be determined from the difference between the address of the first block and the address the last block.

When the information is sent to the buffer memory for buffering, the addressing circuitry or function 24 assigns the addresses that the information will be written to. In some embodiments, certain blocks of the memory20 may be pre-assigned or reserved for buffering purposes. When the information that will be buffered is received, the addressing circuitry 24 assigns the beginning address in accordance with this pre-assignment or reservation.

By way of example, assume that the section of the memory between 0x0010000 and 0x009fffff is assigned for the buffer. The addressing circuitry assigns 0x00100000 for the beginning address of the memory for storing the information to the buffer, and the end address of the information is set as 0x0019ffff. The size of the information that is saved on the buffer memory can be determined from the difference between the beginning address and the end address of this process.

Thus in some embodiments, the size of the information or data by be determined by the difference between start and end addresses. In other embodiments, each address will correspond to a block. In these embodiments, the size of each block as well as the difference between the start and end addresses will be used to determine the size of the information or data.

It should be appreciated that these techniques can be used to determine the size of information regardless as to whether the information is to be sent in packets or not. Non packetized data may be sent, for example, via the IR link.

In some embodiments, the data may be stored in non-contiguous locations. The addresses where the data is stored may still be used to determine the size of data in this embodiment.

It should be appreciated that in other embodiments, any other technique may be used to determine the size of the information or the data. In these embodiments, the information or data to be transmitted may not be stored in contiguous physical or virtual addresses.

The buffer in some embodiments may be separate from the memory.

The size information is provided to the processor 26. In some embodiments, the address information may be provided to the processor by the addressing circuitry or function 24. The processor 26 may then determine the size of the information.

In other embodiments, the addressing circuitry or function may be configured to determine the size of the data and provide that information to the processor.

In some embodiments, it is determined which transmission path should be used. Using the size information, the microprocessor calculates which transmission path should be used.

In case where the data to be sent is minimal, then the data may be transmitted with IR. If the size of the data to be sent is above a certain threshold, it may be sent with Wi-Fi etc.

In some embodiments, the determination as to which transmission path to be used may take into account one or more of the following:
1- the size of the data to be sent;
2- power consumption of each transmission path;
3- header data which will be added to the data to be transmitted;
4- a settling or set up time for building a connection for a transmission path; and
5- performance data that is determined for each transmission path.
This determination may be performed by the processor.

The first device may determine the connection time and/or bandwidth of each transmission path regularly. For example, the first device may regularly monitor the transmission rate of a particular transmission path, by measuring the time that is required for the receiving (second) device to receive the data starting from the time when the payload is packetized at the transmitting (first) device. The time between the beginning of the packetizing of the payload data at the transmitting (first) device and reception of the data by the receiving device for each transmission path is determined. This time may be used in order to determine performance data for each transmission path. These transmission paths are associated with the respective protocol. The performance data of each transmission path may be used to determine the appropriate transmission path for transmitting the information. The performance data may be stored in the memory or in any other suitable data store.

In some embodiments, the performance data of a path may require feedback data to be provided by the receiving device. The feedback data may indicate when a packet was received by the receiving device. If the protocol is a reliable protocol, that is requiring an acknowledgment of a packet, that acknowledgement may be used in determining the performance of path.

In some embodiments, the first device may be able to determine performance data of a path using information available at the first device only. This information may be information on how long a connection takes to be initiated (if required by the protocol) and the rate at which data can be transmitted by the first device.

The packets used to determine the performance may be one or more test packets. The test packets may be of one or more different sizes.

Alternatively or additionally, the performance data may be updated based on performance information associated with the transmission of "real" as opposed to test data.

In some embodiments, the performance information may be pre-programmed or stored in the first device.

In some embodiments, the determination of the transmission function to be used, uses one or more of the above mentioned factors. This determination may be performed before any packetizing has been performed or after the data has been packetized in accordance with one of the communication protocols.

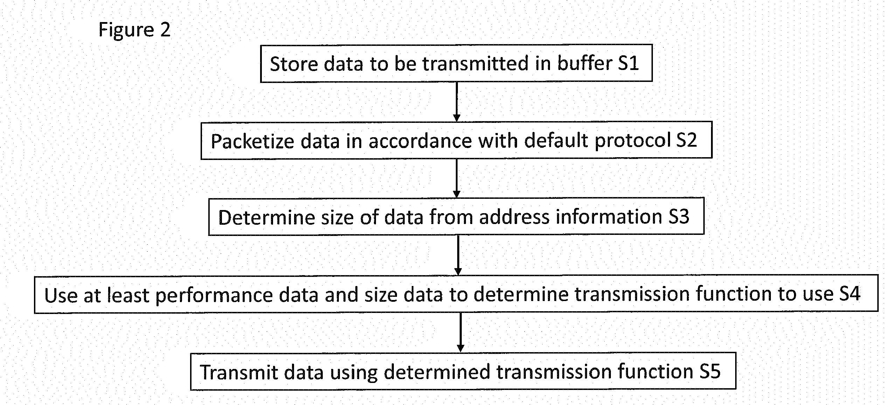

An example method will now be described with reference to Figure 2.

In step S 1, data which is to be transmitted is stored in the buffer.

In step S2, data is packetized in accordance with a default protocol. This is optional in some embodiments.

In step S3, the size of the data is determined from the buffer address information associated with the stored location of the data. This may take place before, after and/or at the same time as step S2.

In step S4, at least performance data and the size of the data is used to determine which transmission function to use.

In step S5, the data is transmitted using the determined transmission function.

An example situation will now be described.

A remote controller is programmed to provide information to the television using the Wi-Fi communication protocol. Accordingly the payload that to be packetized in accordance with the Wi-Fi protocol is stored in the buffer. At this stage the processor may receive or determine the size information. This size information may be used in conjunction with the performance data to determine which transmission path to use.

As an example, the size of the information to be sent is 1MB. Using the performance data and this size information, it may be determined by the processor that this data can be sent with Wi-Fi in 4 seconds (taking into account the SSID connection that needs to be established and/or the like), but with an ongoing Bluetooth connection, the data can be transmitted in 2 seconds. The payload will be packetized in accordance with the Bluetooth protocol and sent via the Bluetooth transmission path.

In another example, the information to be sent is 5 MB and according to the performance information, this size of data indicates that this data can be sent with Wi-Fi in 5 seconds but with an ongoing Bluetooth connection in 10 seconds. The payload will be packetized in accordance with the Wi-Fi protocol and sent via the Wi-Fi transmission path.

In one embodiment, the information can be first packetized according to one protocol and then packetized according to a second protocol. The information is then transmitted in accordance with the second protocol. At the receiving device, the receiver in accordance with the second protocol will de-packetize the data and pass the data packetized in accordance with the first protocol to the receiver associated with the first protocol. This may be in order to provide compatibility.

This embodiment may ensure the interoperability of the plurality of transmission paths with each other in the case that the receiver requires that the information is received from the appropriate receiver of the required transmission path.

The first protocol may for example be Wi-Fi and the second protocol may be Bluetooth, or vice versa.

In some embodiments, the data or information to be transmitted is packetized in such a way as to identify the first protocol. This may be inherent in the packetizing and/or may be provided using a data field, meta data or using any other suitable method. This indicating data may be added before, during or after the packetizing.

If the first communication protocol is identified, this allows the receiver to route the received data which is packetized in accordance with the second protocol to be routed appropriately. For example the received data may be first de-packetized in accordance with the second protocol and then routed to the receiver function for the first protocol.

In another embodiment, the information or data to be transmitted may be non-packetized information, and the required bandwidth is calculated using the size information. If, for example, the data can be sent via IR transmitter, it is transmitted via an IR transmitter.

In some embodiments, data may be sent via one communication link but with information, for example, header information for another communication link. For example data may be sent via an IR link, in dependence on its size, but is required by a Bluetooth application in the second device. Accordingly, the transmitting device may add a Bluetooth header to the data which is sent via the IR link. The receiving device when it receives this data through its IR receiver, identifies the header as being directed to the Bluetooth receiver and sends the data to the Bluetooth receiver as an incoming Bluetooth signal.

It should be appreciated that in this embodiment, Bluetooth and IR are given by way of example only. In other embodiments, different protocols may be used.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments.

In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A device comprising:
a plurality of transmission functions, at least two transmission functions being configured to transmit data in accordance with different communication protocols;
a memory configured to store data to be transmitted, whereby a size of said data is determined from address information associated with the stored data in said memory; and
at least one processor configured to determine based on said size of data which of said transmission functions to use.

2. A device as claimed in any claim 1, wherein said at least one processor is configured to use, when determining which of said transmission functions to use, in addition to said size of data, performance data associated with at least one transmission path from said device to a receiving device, the or each transmission path being associated with a respective transmission function.

3. A device as claimed in claim 2, wherein said performance data for at least one transmission path is dependent on at least one of a bandwidth of said respective transmission path and a connection time associated with said transmission path.

4. A device as claimed in claim 2 or 3, wherein said at least one processor is configured to determine for at least one transmission path a time between data being prepared for transmission by a respective transmission function and being received at a receiving device.

5. A device as claimed in any preceding claim, wherein at least one transmission function is configured to prepare said data for transmission by packetizing said data as a payload in at least one packet.

6. A device as claimed in any preceding claim, wherein said at least one processor is configured to determine which of said transmission functions to use while and/or after a default one of said transmission functions has prepared said data for transmission.

7. A device as claimed in any preceding claim, wherein said at least one processor is configured to use, when determining which of said transmission functions to use, in addition to said size of data, at least one of:
power consumption associated with at least one transmission path from said device to a receiving device, the or each transmission path being associated with a respective transmission function:
data added as header to said data to be transmitted; and
set-up time associated at least one transmission path from said device to a receiving device, the or each transmission path being associated with a respective transmission function.

8. A device as claimed in any preceding claim, wherein at least one of said transmission functions is configured to transmit in accordance with a first protocol, said data which is packetized in accordance with a different protocol.

9. A device as claimed in any preceding claim, wherein at least one of said transmission functions is configured to cause said data to be transmitted in data packets and at least one of said transmission functions is configured to cause said data to be transmitted in a data stream.

10. A device as claimed in claim 9, wherein at least one of said transmission functions is configured to transmit said data in a data stream in accordance with one protocol with header data associated with a different protocol.

11. A controller as claimed in any preceding claim, wherein said different communication protocols comprise one or more of: a Wi-Fi protocol; a Bluetooth protocol; and an infra-red protocol.

12. A controller for controlling a television device comprising a device as claimed in any preceding claim.

13. A method comprising:
storing data to be transmitted in a memory;
determining a size of said data from address information associated with the stored data in said memory; and
determining based on said size of data which of a plurality of transmission functions to use, at least two transmission functions being configured to transmit data in accordance with different communication protocols;

14. A method as claimed in claim 13, wherein said determining further comprises using performance data associated with at least one transmission path, the or each transmission path being associated with a respective transmission function.

15. A method as claimed in claim 14, wherein said performance data for at least one transmission path is dependent on at least one of a bandwidth of said respective transmission path and a connection time associated with said transmission path.
